(19) **Europäisches Patentamt / European Patent Office / Office européen des brevets**

(11) **EP 2 694 828 B1**

(12) **EUROPEAN PATENT SPECIFICATION**

(45) Date of publication and mention
of the grant of the patent:
**30.03.2016 Bulletin 2016/13**

(21) Application number: **11862097.0**

(22) Date of filing: **01.04.2011**

(51) Int Cl.:
***F16C 32/04*** (2006.01)

(86) International application number:
**PCT/SE2011/050388**

(87) International publication number:
**WO 2012/134367 (04.10.2012 Gazette 2012/40)**

(54) **A CONICAL MAGNETIC BEARING**

KONISCHES MAGNETLAGER

PALIER MAGNÉTIQUE CONIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**12.02.2014 Bulletin 2014/07**

(73) Proprietor: **Electric Line Uppland AB
754 50 Uppsala (SE)**

(72) Inventor: **ABRAHAMSSON, Johan
S-753 34 Uppsala (SE)**

(74) Representative: **Groth & Co. KB
P.O. Box 6107
102 32 Stockholm (SE)**

(56) References cited:
**EP-A1- 1 885 047    US-A1- 2005 264 118**

**Description**

**Field of invention**

The present invention relates to a conical magnetic bearing for contact-free journaling a rotating body, which bearing includes a rotary component and a stationary component, the rotary component including at least two elements mechanically connected to each other in a fixed relationship, each of said element having at least one conical surface defining a respective axis of the element, the axes of the elements being aligned with each other, at least one of said elements being provided with magnets at its conical surface, the stationary component including a conical winding arrangement adjacent each of said magnet-provided conical surfaces, each said winding arrangement including at least two electric windings of different phases.

The invention also relates to an electric machine including such a bearing and to a vehicle or a craft including such a machine.

In the present application, terms like axial, radial, tangential etc. relate to the axis of the rotating body that is journaled by the bearing if not explicitly mentioned otherwise. By cone is meant a right circular cone, and conical relates to such a cone.

**Background of invention**

Magnetic bearings may be used as bearings for a rotary electric machines, whereby the bearings work by exposing parts of the rotor to magnetic forces in radial and axial directions in such a way that it remains levitating in stable equilibrium inside the stator even when disturbed by external forces. Due to the non-contact nature of the bearings, there is no wear nor friction, except for the air friction, and no need for lubrication. A drawback for many applications is however the additional cost and complexity.

For a generator or an electric motor the complexity of the magnetic bearing arrangement can be reduced by integrating the bearing functionality into the stator. This means that the stator generates not only the motoring torque or receives the generating torque, respectively, but also the forces necessary to keep the rotor levitating in stable equilibrium. This is traditionally achieved by the superposition of a stabilizing magnetic field from a secondary winding on the motoring field from a secondary winding. It is also possible to generate both motoring/generating torque and stabilizing forces in one multiphase winding. Two such stator units surrounding a common rotor permits control in all radial directions.

Cone shaped magnetic bearings have been designed in order to achieve levitation not only in the radial directions, but also axially. The axial force is created by the magnetic attraction between the permanent magnets of the rotor and the magnetic steel in the stator. Stable axial levitation can in this way be achieved by monitoring the axial position of the rotor, and adjusting the motoring flux in the two stator units accordingly.

In the special case of the double rotor, coreless electrical machine, the above solution is not possible since the stator does not create any forces in axial or radial direction on the rotor. Such a machine have been designed and constructed for use as an energy buffer for electric vehicles. The axial configuration creates a compact design with high power density, and the double rotor minimizes losses from eddy currents since the return flux forms part of the rotor.

Representative examples of the above described prior art are disclosed in US 7 667 418 and US 2006/238053 and in the articles:

- *Magnetic Bearings and Bearingless drives,* by A. Chiba et al, Newnes, 2005.
- *Analysis and experiment of* a *6-phase bearingless induction motor,* by Min Kang et al, Electrical Machines and Systems, 2008, ICEMS 2008. International conference 2008, pp. 990-994.
- *Principle and solution of a 5-phase bearingless permanent magnet-type synchronous motor,* by Min Kang et al, Electrical Machines and Systems, 2008, ICEMS 2008. International Conference 2008, pp. 1148-1152.
- *Losses in axial-flux permanent-magnet coreless flywheel energy storage systems,* by J Santiago et al, Electrical Machines, 2008. International Conference 2008, pp. 1-5.

A conical magnetic bearing according to the present invention may be applied in a rotary electric machine, e.g. in a vehicle with such a machine. An example of a machine and a vehicle where the present invention is of particular interest to apply is disclosed in EP 1 565 337. EP-A-1885047 discloses the features of the preamble of claim 1.

Summary of invention

The object of the present invention is to overcome the limitations and drawbacks related to known technique in the field, and in particular to provide a conical magnetic bearing of the kind in question which allows levitation in all radial directions and in the axial direction with an uncomplicated, compact and reliable construction.

This object is according to the present invention achieved in that a conical magnetic bearing of the kind introductionally specified includes the specific features that the electric winding arrangement is arranged in the airgap between two adjacent conical elements and is attached to a respective non-ferrous stationary support structure arranged to provide fixation of the respective winding arrangement in a defined position, whereby each of the winding arrangements consists of a plurality of conductors extending in a conical plane, each conductor extending at an angle in relation to a projection of the cone axis on the conical plane, which angle is in the range of 1 ° to 89° at least during the major extension of the conductor, and in that said angle of a first of said winding arrangements is in the opposite direction to said angle of a second of said winding arrangements.

Thanks to the thus skewed orientation of the winding arrangements it is possible to obtain forces acting on the rotating part in all radial directions as well as in the axial direction, without the necessity to provide iron cores to create a Maxwell force for the axial direction. Since the skewing are in the opposite directions the axial force from each winding arrangement counteract each other. A resultant axial force thereby can be obtained by establishing a difference in the currents in the winding arrangements. Forces in the radial directions are obtained by in each winding arrangement adequately tuning the current in the conductors relative to each other.

Since the winding arrangements have no iron cores, the construction will be compact and simple and haw very low losses. The conductors are kept in stable position by the support structure.

According to a preferred embodiment the angle at which the conductors are skewed is in the range of 5° to 30°.

This range represents an optimal balance between the need to have a sufficient large angle to obtain a proper axial net force and the need to keep the angle small enough to allow place for a large number of conductors in the conical plane.

According to a further preferred embodiment the angle is continuously changing along the extension of each conductor.

Due to the complicated geometry of a line extending in a skewed direction on a conical surface the optimal effect of the axial forces from the interaction between the magnets and the conductor requires that the angle is different at different axial positions along the conductor.

According to a further preferred embodiment, in a winding arrangement, the distance between two adjacent conductors in any plane perpendicular to the cone axis is the same for all pairs of adjacent conductors.

This equidistant positioning of the conductors results in an even force distribution in the circumferential direction. This leads to stable conditions for levitation and for incremental corrections of the axial position of the rotating body. This also simplifies calculation of the forces and how to affect the currents in the conductors for position correction. By this embodiment also the number of conductors that are possible to have in each stationary element is maximized.

According to a further preferred embodiment, all conductors in a winding arrangement are in parallel as seen in a projection on a cylindrical surface coaxial with the conical plane.

This embodiment also contributes to an even and foreseenable force distribution and has advantages similar to that of the embodiment mentioned next above.

According to a further preferred embodiment the geometrical configurations of the conductors in said first winding arrangement is the same as the geometrical configuration of the conductors in said second winding arrangement except from representing a mirror picture thereof.

Since the two winding arrangements, which generate axial forces in opposite directions, have the same geometry it will be easy to obtain a zero net force, and the effect of change of the currents in the conductors on the resulting axial net force will be predictable and simple to control. This increases the accuracy in corrections for maintaining the rotating part within the proper position.

According to a further preferred embodiment, the winding of each phase includes two sub-windings.

Thereby the creation of radial forces will be simplified by allowing a difference in current in the sub-windings of the phase.

According to a further preferred embodiment, a winding arrangement includes three phases.

Since three-phase current is the normal kind used for generation and driving, the application of the invention is of particular interest for such current.. It is however to be understood that the invention in its generalized form may be employed also for two-phase current and for current with more phases than three.

According to a further preferred embodiment, the support structure is non-metallic.

Thereby the weight is kept low, and magnetic losses due to the supporting structure are avoided. Suitable materials for the supporting structures are polymers such as epoxy or a ceramic.

According to a further preferred embodiment the winding arrangement is embedded in the support structure.

This provides well-defined surfaces on the stationary elements, whereby the air gap between a stationary element and the adjacent rotating element is well defined for measurements of the relative position of these elements in order to provide for adequate corrections thereof. In addition the winding arrangement will be well protected.

According to a further preferred embodiment the number of the conical surfaces of the rotating component is in the range of two to four.

Two such surfaces is the minimum number to achieve levitation according to the invention. With a larger number, however, the levitation and the position correction can be achieved with higher security and accuracy in certain applications. Normally more than four such surfaces is not required, but in the generalized form of the invention this is not excluded.

According to a further preferred embodiment, the number of the conical surfaces of the rotating component is four.

This in most cases represents the optimal balance between the need to obtain accurate position corrections and the desire not to make the bearing unnecessarily complicated.

According to a further preferred embodiment at least two of said conical surfaces of the rotating component have their respective small end of the conical surface facing in the same direction.

This allows a compact design of the bearing and results in a very predictable performance regarding positioning correction. In embodiments having more than two such conical surfaces it is preferred that more than two of them have their respective small end facing in the same direction, particularly preferable all of them.

According to a further preferred embodiment, the elements of the rotating body that have their respective small ends of the conical surface facing in the same direction, includes at least two elements, one being an inner element and another being an outer element, which inner element at least partly is located within the outer element, whereby the inner element has an outer conical surface facing an inner conical surface of the outer element with a clearance between the outer and the inner conical surface.

This further increases the possibility to attain a very compact device since the elements are axially overlapping each other. With this configuration one single winding arrangement located in the clearance can be used to cooperate with both the inner and the outer conical surface, which further contributes to a compact construction.

According to a further preferred embodiment, the inner and outer conical surfaces have the same cone angle.

Thereby the gap between the two conical surfaces will be constant, which result in stable operation conditions and uncomplicated position corrections.

According to a further preferred embodiment, the rotary component includes at least three conical elements which have their respective small ends of the conical surface facing in the same direction, whereby at least one of the elements is an intermediate element that is located between the outer and the inner element, which each intermediate element has an inner conical surface facing the outer conical surface of the inner element with a clearance between these conical surfaces, and has an outer conical surface facing the inner conical surface of the outer element with a clearance between these conical surfaces, whereby each pair of adjacent conical surfaces have the same cone angle.

Although it is within the scope of this embodiment to have more than one such intermediate element, normally only one is preferred, since this is sufficient to obtain the levitation in all directions without any further element and since this is less complicated than using a plurality of elements. By this embodiment it is created two conical gaps between the elements such that a winding arrangement can be located in each of the gaps, which winding arrangements have their conductors skewed in the two opposite directions described above. This embodiment thereby represents a further step towards integrating the complete functionality of the conical magnetic bearing into a unit that is compact and easy to control.

According to a further embodiment, all these conical surfaces have the same cone angle.

Thereby advantages of a kind discussed above are gained also for the multi-element embodiment.

According to a further preferred embodiment magnets are provided at more than one of the conical surfaces, preferably at all of the magnetic surfaces.

Thereby a more efficient and more precise cooperation between the elements and the respective winding arrangement is obtained, in particular when all conical surfaces have magnets.

According to a further preferred embodiment, at least some of the magnets are permanent magnets.

This still further contributes to an effective and stable force generation. Preferably all the magnets are permanent magnets.

According to a further preferred embodiment, the cone angle, i. e. half the vertex angle is within the range of 10° to 40°, preferably within the range of 17° to 23°.

Although the invented bearing can work satisfactory also if he cone angle is outside the specified range, this range represents an optimization of the effect of the geometry for the performance of the bearing regarding the creation of radial as well as axial bearing forces. Particularly suitable in this respect is cone angles around 20°.

According to a further preferred embodiment, the bearing includes sensing means sensing the distance between at least one of said conical surfaces and the adjacent winding arrangement, and further includes control means affecting the current in the windings of at least one of said winding arrangements, which control means operate in response to the sensing means.

By sensing a parameter reflecting the position of the rotating component and govern a parameter affecting the position a correct levitation is automatically achieved in a simple way. To use the defined distance as the sensed parameter is advantageous since it is directly indicative of the position of the rotating component and thereby sources for eventual faults are at minimum. Using the current as the affecting the parameter is a simple and direct way of correcting the position of the rotating component, and the response will be immediate.

According to a further preferred embodiment, the sensing means includes at least two sensors located at different axial positions of the conical magnetic bearing.

The two different sensed values allows to detect not only the linear position of the rotating component put also its angular position. Thereby information is obtained to correct radial correction as well as correction of a tilted position of the rotating component, resulting in a complete levitation control. Preferably the sensors are located as far as possible from each other, i.e. closed to the ends of one of the conical surfaces. When using two sensors it is in principle possible to locate them at two different conical surfaces. However, it is preferred to arrange the sensors at one and the same conical surface, since that leads to a more accurate measuring, less complicated algorithms for processing the signals from the sensor and an uncomplicated arrangement of the sensing system.

According to a further preferred embodiment, the sensing means operates intermittently at a frequency in the range of 1 kHz to 100 kHz.

It is important to provide position information often in order to be able to correct any deviation from the correct position as quickly as possible and thereby reduce such deviations to a minimum. The lower limit of the range represents a frequency that in most cases is sufficient in this respect. Higher frequency than the upper limit is normally not required and would also imply practical difficulties in the realization thereof. A preferred range is 10 kHz to 30 kHz, where the balance between the need to achieve quick correction and the desire to avoid unnecessary sophisticated controlling is optimized.

According to a further preferred embodiment, the sensing means also senses the time derivative of the distance.

By the additional information of the velocity of the change of the distance and using also this information for the control, correction of the position can be made more adequate than if only the distance is used for the regulation.

The invention also relates to a rotary electric machine that is provided with a conical magnetic bearing according to the present invention, in particular according to any of the preferred embodiments thereof, whereby the rotating component constitutes the rotor of the machine and the stationary component constitutes the stator of the machine.

Using the conical magnetic bearing for an electric machine is the most important application of the invention. The magnetic bearing thereby is an integrated part of the electric machine. Thus the cooperation between the magnets and the winding arrangement also transfers torque between the rotating component and the stationary component in addition to generating forces for the radial and axial balancing of the rotating component.

According to a preferred embodiment of the electric machine, it is arranged to operate alternating as a motor and a generator.

In cases where there during periods is a need to supply electric energy and during other periods a need to generate electrical energy such a combined machine is very useful. The magnetic bearing according to the invention is particularly advantageous for such an application due to the absence of mechanical losses for the journaling and due to its efficiency in maintaining the rotor in a proper position.

According to a further preferred embodiment of the electric machine, each winding arrangement is divided into two separate winding sets, one set for high voltage and one set for low voltage.

In some applications of an electric machine there is a need to have a possibility to transform the energy either at a high power or at a low power. This applies both for a generator and for a motor and in particular for a machine operable at both modes. Providing this possibility by low and high voltage winding sets is a simple and reliable way to realize this, and this arrangement is well adapted for the integration into the invented conical magnetic bearing.

According to a further preferred embodiment, the electric machine includes a flywheel connected to the rotor.

A flywheel is a convenient alternative to store mechanical energy received when the machine operates as a motor. In order to make it possible to store a large amount of energy in the flywheel, the flywheel should be rotatable up to a very high rpm. If there is no gear mechanism between the rotor of the machine and the flywheel, the rotor will have the same high rpm. The conical magnetic bearing according to the invention is well suitable to operate satisfactory atsuch high rpm and to cope with the additional mechanical forces that might develop due to the high inertia of the flywheel. This is therefore a very important application of the invented bearing.

The invention also relates to a vehicle or a craft that includes a rotary electric machine according to the present invention, in particular to any of the preferred embodiments thereof. By craft is understood any kind of boat or aircraft.

For vehicles, in particular cars it is nowadays a great interest to find alternatives to petrol as the energy source. A vehicle driven completely or supplementary by electric energy is an important alternative in this respect. The invented machine is advantageous for such drive. The magnetic journaling of the rotor eliminates mechanical losses, and due to the capability to maintain the rotor levitating by a high frequent correction of its position, the vibrations occurring in a running vehicle does not affect a proper position of the rotor.

The invented electric machine and the invented vehicle and the preferred embodiments of these further have advantages corresponding to those of the invented conical magnetic bearing and the preferred embodiments thereof, and which have been described above.

The above described preferred embodiments of the invention are specified in the dependent claims. It is to be understood that further preferred embodiments of course can be constituted by any possible combination of the preferred embodiments above and by any possible combination of these and features mentioned in the description of examples below.

The invention will be further explained through the following detailed description of examples thereof and with reference to the accompanying drawings.

**Short description of the drawings**

Fig. 1 .is a section through the axis of a magnetic bearing according to the invention.

Fig. 2 is a schematic side view of a detail of the magnetic bearing in fig. 1.

Fig. 3 is a schematic side view of further details of the magnetic bearing in fig. 1.

Fig. 4 is an end view of fig. 2.

Fig 5 is an enlarged section through a detail of fig. 1.

Figs. 6 -9 are simplified side views of alternative examples of a magnetic bearing according to the invention.

Fig. 10 is a schematic side view of an electrical machine according to the invention.

Fig. 11 is a schematic side view of a vehicle according to the invention.

**Description of examples**

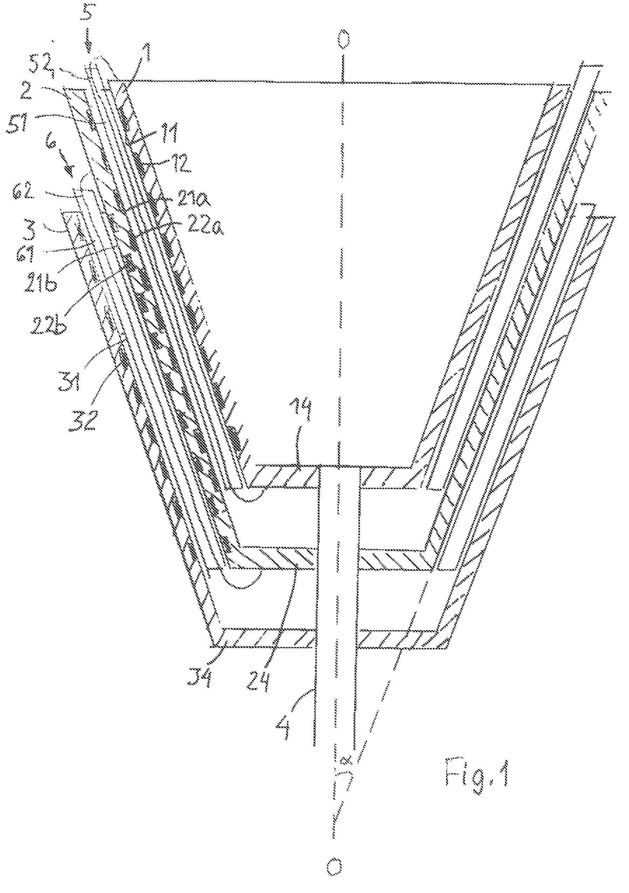

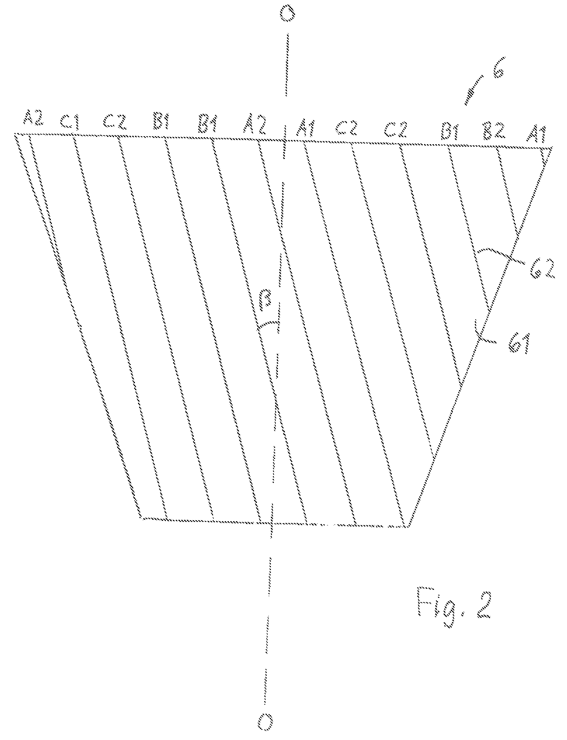

Fig. 1 is a schematic section through the axis of a conical magnetic bearing according a first example of the invention and is together with figures 2 -4 used to explain the basic principles of the invention. The bearing in figures 1-4 operates also as an electric machine.

The machine has a rotating component being the rotor of the machine that consists of three coaxial conical elements 1, 2, 3, rigidly connected by a common shaft 4. Each of the elements 1, 2, 3 is a truncated cone that is cup shaped, with a respective bottom 14, 24, 34 that connects the conical part to the shaft 4. The elements have the same cone angle $\alpha$ and are inserted into each other with a respective gap between each two elements. Due to the similar geometry the gap width between two adjacent elements is constant. The gap width between the inner element 1 and the intermediate element 2 is the same as the gap between the intermediate element 2 and the outer element 3.

On the outer surface 11 of the outer element 1 a plurality of permanent magnets 12 are mounted. The intermediate element 2 has permanent magnets 22a, 22b on its inner surface 21 a and on its outer surface 21 b, respectively. The outer element 3 has permanent magnets 32 on its inner surface 31,

In the inner gap is provided a first winding arrangement 5, and in the outer gap is provided a second winding arrangement 6. Each of the winding arrangements 5, 6 includes a plurality of conductors in three main phases. Each main phase is divided into two sub-phases.

The winding arrangements are both embedded in a support structure 51, 61, e.g. of epoxy. The two support structures are rigidly connected (not shown) to form a common stationary component, being the stator of the machine whereby each winding arrangement represents a stator unit. No iron cores are present in the winding arrangements.

Each winding arrangement 5, 6 consists of conductors 52, 62 that extend along the conical extension of the respective support structure with its main direction component in the axial direction, and have their end loops at the interspaces between the bottoms 14, 24, 34 of the rotating elements and above the elements respectively. The conductors 52, 62 may be fine copper wires.

Fig. 2 in a schematic side view illustrates the second, i. e. the outer winding arrangement 6 of fig.1. The conductors 62 embedded in the support structure 6 are skewed in the sense that any part of the conductor forms an angle $\beta$ with a projection A-A of the axis of the machine in the conical plane in which all the conductors 62 are located. Due to the conical shape of the plane in which the conductors are located a conductor will not follow a straight line but have a complicated configuration in space, whereby the angle $\beta$ not necessarily is constant along the conductor. In this example all the conductors are in parallel and at equal distances between each other.

The winding arrangement in this example is three phase, and each phase, i.e. main phase is divided into two sub-phases. The first phase has the sub-phases A1 and A2, and the other two B1, B2 and C1, C2, respectively. The functionality of the sub-phases will be explained further below.

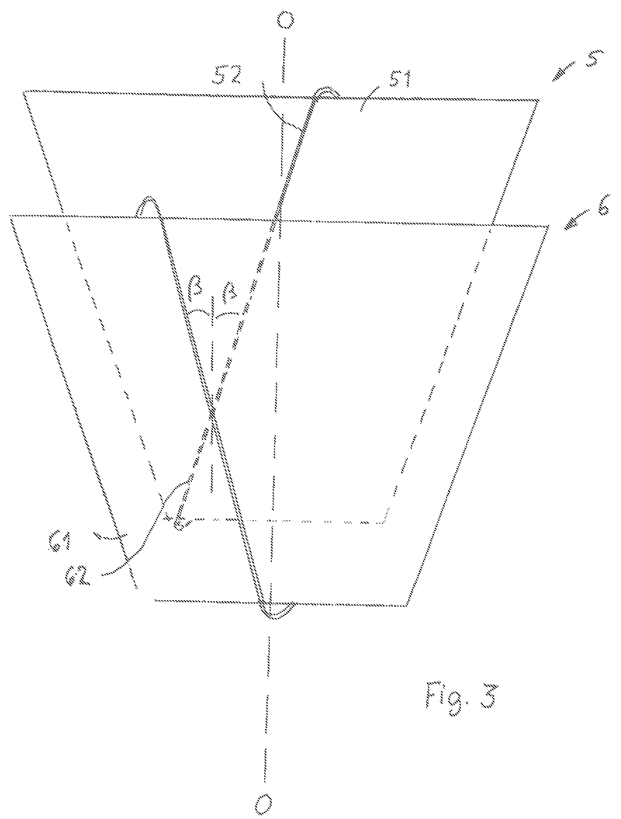

Fig. 3 schematically illustrates the relation between the first and the second winding arrangements. This is also a side view, in which the first winding arrangement 5, located inside the second winding arrangement is indicated by broken lines. Only one conductor 52, 62 of each winding arrangement is illustrated in the figure. The conductors 62 of the second winding arrangement 6 is skewed an angle $\beta$ in relation to the line O-O as explained in connection with fig.

2. The conductors 52 of the first winding arrangement 5 likewise are skewed an angle β in relation to the line O-O, but in the opposite direction.

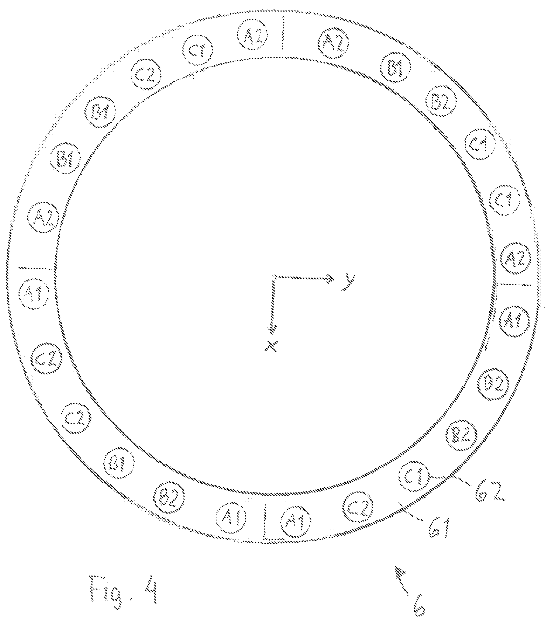

Fig. 4 is a cross section perpendicular to the axis O-O through the second winding arrangement 6. In this figure the number of conductors 62 in the winding arrangement is 24, but the total number can be much higher, such as 200 - 400.. Each conductor is indicated to which phase and sub-phase it belongs.

By the bearing illustrated in figures 1 to 4 the machine can provide magnet forces in all directions, tangential forces for torque transmission, radial forces for the radial positioning of the rotor and axial forces for the axial positioning of the rotor such that driving as well as levitation is achieved, which will be explained below.

Due to the skewing of the conductors a force component is created in the axial direction. The resulting axial force created by the two winding arrangements will tend to be outbalanced since the conductors are skewed in the opposite directions. By increasing the power output of one of the winding arrangements, while decreasing the power from the other one by the same amount, a net axial force can be generated without changing the torque of the machine. This force is used to control the axial position of the rotor. Only some few percents difference is sufficient to obtain this effect.

The total currents through each of the main phases are sinusoidal functions with amplitudes $I_{S5}$ and $I_{S6}$ for the winding arrangements 5 and 6 respectively. These are separated by 120 electrical degrees. The current to each stator unit 5, 6 is varied around a common value, $I_S$.

$$I_{S5} = I_S + \Delta I_S \qquad (1)$$

$$I_{S6} = I_S + \Delta I_S$$

The current through the two sub-phases of ech main phase are controlled separately. During normal operation they are nearly identical, differing only by a variable imbalance current $\Delta I_A$ in such a way that

$$I_{A5} = I_{S5} \sin (\omega t) + \Delta I_A (t) \qquad (2)$$

$$I_{A6} = I_{S6} \sin (\omega t) + \Delta I_A (t)$$

Where ω is the angular velocity of the magnetic field of the stator, and t is the time. The imbalance generates a net force in radial direction, while maintaining the total current and circumferential torque constant. By introducing similar imbalance currents in phases B and C, a net force in any radial direction can be generated.

The force on the stator winding for a specific current can be calculated using the equation for Lorentz force, since the stator does not contain any magnetic material. The rotor magnets 12, 22a, 22b, 32 must experience the corresponding reaction force, which is a function of current, magnetic field an geometry of the stator windings. The shape of a skewed winding in the conical plane must therefore be calculated.

Geometry of the winding

Any line Γ, joining two given points on the surface of a cone with apex at the origin can be written in Cartesian coordinates, with $u$ being the free parameter, as

$$\Gamma_x = u \tan \alpha \cos (\theta (u)) \qquad (3)$$

$$\Gamma_y = u \tan \alpha \sin (\theta (u))$$

$$\Gamma_z = u,$$

where $0 \leq h_1 \leq u \leq h_2$ where $h_1 \neq h_2$ and α is the cone angle. The function $\theta(u)$ defines the angular position of the starting point, $\theta(h_1)$, the angular position of the ending point, $\theta(h_2)$, as well as the exact path the conductor utilizes to connect these two points.

The stator winding of the machine will not only be placed on the conical plane, it will also be tightened. The shape of the line is determined by defining a starting point, an ending point, and finding the curve with the shortest total length which connects the two. The total length, $L$, of any such curve is given by

$$L = \int_{h_1}^{h_2} \sqrt{\left(\frac{dx}{du}\right)^2 + \left(\frac{dy}{du}\right)^2 + \left(\frac{dz}{du}\right)^2}\, du.$$

$$(4)$$

Combining (3) and (4) yelds:

$$L = \int_{h_1}^{h_2} G(u, \theta')\, du,$$

$$(5)$$

with

$$G = \frac{\sqrt{1 + u^2 sin^2 \alpha \theta'^2}}{\cos \alpha}.$$

$$(6)$$

Calculus of variation can now be used to find the resulting curve. To this end, G is inserted into the Euler-Lagrange equation

$$\frac{\partial G}{\partial \theta} = \frac{d}{du} \frac{\partial G}{\partial \theta'}$$

$$(7)$$

Since G is not a function of $\theta$, this simplifies to

$$C_1 = \frac{u^2 \theta' tan^2 \alpha}{\sqrt{sec^2 a + u^2 \theta'^2 tan^2 \alpha}}$$

$$(8)$$

where $C_1$ is an arbitrary constant of integration. Solving this expression for $\theta'$ yields

$$\theta' = \frac{C_1 \csc \alpha}{u \sqrt{u^2 tan^2 \alpha - C_1^2}}$$

$$(9)$$

and an integration results in the final expression for $\theta$ as a function of u,

$$\theta(u) = C_2 - \csc \alpha \sin^{-1} \frac{C_1}{u \tan \alpha}$$

$$(10)$$

where $C_2$ is an arbitrary constant. The boundary conditions defining the starting and ending point of the winding can now be used to calculate the constants $C_1$, and $C_2$.

The x-axis may be aligned with the starting point of the curve without loss of generality, so the boundary conditions become $\theta(h_1) = 0$ and $\theta(h_2) = \beta$. The equations for $\theta$ and $\theta'$ may thereby be expressed as

$$\theta(u) = \csc\alpha \left( \sin^{-1}\frac{C}{h_1} - \sin^{-1}\frac{C}{u} \right)$$

$$(11)$$

and

$$\theta' = \frac{C\csc\alpha}{u\sqrt{u^2 - C^2}}$$

$$(12)$$

with

$$C = \frac{C^1}{\tan\alpha} = \frac{h_1 h_2 \sin(\beta\sin\alpha)}{\sqrt{h_1^2 + h_2^2 - 2h_1 h_2 \cos(\beta\sin\alpha)}}$$

$$(13)$$

Note that C, for a given geometry, may be either positive or negative depending on the direction of the skewness of the windings.

Inserting these results in (4) results in an equation for the total length of the geodesic,

$$L = \frac{\sqrt{h_1^2 + h_2^2 - 2h_1 h_2 \cos(\beta\sin\alpha)}}{\cos\alpha}$$

$$(14)$$

The above considerations, leading up to the mathematical description of the curve a tightened winding will follow, forms the base for calculating the force the rotor will experience when a current driven through the stator.

Magnetic Field

The permanent magnets attached to the rotor are assumed to generate a uniform magnetic field, $B$, directed to normal to the surface of the rotor at all points. Due to the large air-gap, and the lack of stator iron, the magnetic field will be approximately sinusoidal in circumferential direction.

The equation describing the uniform magnetic field from the permanent magnets can be written in cylindrical coordinates as

$$\bar{B} \begin{cases} B_\rho = -B\cos\alpha \\ B_\emptyset = 0 \\ B_z = B\sin\alpha \end{cases}$$

$$(15)$$

where it has been assumed that the center of one of the permanent magnets has been aligned with the $\theta = 0$.

Forces and Torques

The interaction of the magnetic field with the current through the stator windings generates both the torque needed to accelerate the electric machine and the force required to achieve the bearing functionality.

*A. Force and torque from line segment*

The equation of the winding in cylindrical coordinates become

$$\bar{\Gamma} \begin{cases} \Gamma_\rho = u \tan \alpha \\ \Gamma_\emptyset = \theta(u) \\ \Gamma_z = u \end{cases}$$

$$(16)$$

The force generated by an infinitesimal part of conductor on the permanent magnets in the rotor is

$$d\bar{F} = -Id\bar{\Gamma} \times \bar{B}$$

$$(17)$$

where $I$ is the current in the winding. By calculating the line element $d\bar{\Gamma}$ the force equation can be written as

$$d\bar{F} \begin{cases} dF_{\rho'} = \dfrac{-BIC \tan \alpha}{\sqrt{u^2 - C^2}} du \\ dF_{\emptyset'} = \dfrac{BI}{\cos \alpha} du \\ dF_{z'} = \dfrac{-BIC}{\sqrt{u^2 - C^2}} du \end{cases}$$

$$(18)$$

where the coordinate system has been rotated around the z-axis so that $\rho'$ is aligned with the position of the line segment.
The above equation shows that a winding segment generates forces in all three dimensions. The circumferential force (generating the motoring torque) and the force in axial direction will be in the same direction for all windings of a phase. The radial force will sum to zero around the stator segment when the currents through both parts of the phase are equal.
The forces from the windings also generates a torque, f around the rotors center of mass, according to

$$d\bar{\tau} = \bar{r} \times d\bar{F}$$

$$(19)$$

where $\bar{r}$ is the vector from the center of mass to the position of the conductor element generating dF. The center of mass of the rotor structure is located on the z-axis, at a height $h_c$. The torques become

$$d\bar{\tau} \begin{cases} d\tau_{\rho'} = \dfrac{BI(h_c - u)}{\cos \alpha} \\ d\tau_{\emptyset'} = \dfrac{BICh_c \tan \alpha}{\sqrt{u^2 - C^2}} \\ d\tau_{z'} = \dfrac{BIu \tan \alpha}{\cos \alpha} \end{cases}$$

$$(20)$$

By integrating the force and torque elements over the length of the wire, the total force and torque that the rotor experiences for a given set of currents can be calculated.

*B. Axial force*

The axial force generated by a conductor in the winding is found by integrating $dF_z$ over the height of the unit,

$$F_z = \int_{h_1}^{h_2} dFz = -BIC \ln\left(\frac{\sqrt{h_2^2 - C^2} - h_2}{\sqrt{h_1^2 - C^2} - h_1}\right)$$

(21)

This force is used to control the axial position of the unit. By changing the total current through one stator unit, and adjusting the current through the other unit correspondingly, the axial position can be controlled without influencing the torque of the electric machine. The resulting net axial force on the rotor becomes

$$F_{Ax} = 8NB\Delta I_S C \ln\left(\frac{\sqrt{h_2^2 - C^2} - h_2}{\sqrt{h_1^2 - C^2} - h_1}\right)/3$$

(22)

where N is the total number of turns of the windings in one stator unit.

The rotor structure could use the attractive force between permanent magnets attached to the top the rotor and the mechanical enclosure to negate the gravitational force. This would have the additional benefit of increasing the stability in radial direction. The axial force would then be used to keep the system in balance in axial direction.

*C. Radial force*

By introducing an imbalance of currents through the two parts of phase A, but keeping the sum of the two currents constant $dF_\emptyset$ can be used to generate a force on the rotor in radial direction without changing the motoring torque. The resulting force becomes

$$(\bar{F}_A)_{\hat{x}} = -\frac{2NB\Delta I_A}{3\cos\alpha} \int_{h_1}^{h_2} \sin\theta + \frac{C\sin\alpha\cos\theta}{\sqrt{u^2 - C^2}} du$$

$$(\bar{F}_A)_{\hat{y}} = \frac{2NB\Delta I_A}{3\cos\alpha} \int_{h_1}^{h_2} \cos\theta - \frac{C\sin\alpha\sin\theta}{\sqrt{u^2 - C^2}} du$$

(23)

where N is the number of windings in one stator segment. It is not possible to express the above equations in closed-form, but the integrals can easily be evaluated numerically for a given geometry.

The two stator units have the windings skewed by the same angle, but in different directions. This causes the angle of the force vector $(\bar{F}_A)_{\hat{x}}$ in (23) to change sign. If the stator units are turned by the angle $\gamma$ and $-\gamma$, respectively, the force generated by a given imbalance in the currents of a certain phase can be aligned with the y-axis, where

$$\gamma = arctan\frac{(\bar{F}_A)_{\hat{x}}}{(\bar{F}_A)_{\hat{y}}}$$

(24)

and

$$\bar{F}_A = \sqrt{(\bar{F}_A)_{\hat{x}}^2 + (\bar{F}_A)_{\hat{y}}^2} \, \hat{y}$$

$$(25)$$

The same reasoning applies to the other two phases in the stator unit, producing forces with the magnitude calculated above but turned 120 degrees. A linear combination of imbalance forces in the three phases can produce a force in any radial direction. The rotor can be kept levitating in stable equilibrium to the upper and lower stator units respectively and adjusting the radial force accordingly.

*D. Radial torque*

The imbalance of currents used to create the radial stabilizing force will also cause a torque in radial direction around the center of mass of the rotor. An imbalance of currents in phase A generates the following torque

$$(\bar{\tau}_A)_{\hat{x}} = \frac{2NB\Delta I_A}{3\cos\alpha} \int_{h_1}^{h_2} (h_c - u)\cos\theta - \frac{Ch_c \sin\alpha\sin\theta}{\sqrt{u^2 - C^2}} \, du$$

$$(\bar{\tau}_A)_{\hat{y}} = \frac{2NB\Delta I_A}{3\cos\alpha} \int_{h_1}^{h_2} (h_c - u)\sin\theta - \frac{Ch_c \sin\alpha\cos\theta}{\sqrt{u^2 - C^2}} \, du$$

$$(26)$$

If the stator units have been turned according to the previous section, this torque must also be turned through the same angle.

Knowledge of the magnitude and direction of the imbalance torque can be used in order to increase stability of the control system of the bearing. The force signal needed to counteract the torque generated by one stator unit can be directly added to the other stator unit, before the corresponding displacement occurs.

*E. Motoring torque*

By integrating $d\tau_z$, from $h_1$ to $h_2$, the motoring torque generated by the winding, $\tau_z$, can be found,

$$\tau_z = \int_{h_1}^{h_2} d\tau_{z'} du = \frac{BI\tan\alpha}{2\cos\alpha}(h_2^2 - h_1^2)$$

$$(27)$$

The total motoring torque, $\tau_M$ generated by the two stator segments becomes

$$\tau_M = \frac{4NBI_S \tan\alpha}{3\cos\alpha}(h_2^2 - h_1^2)$$

(28)

or expressed differently,

$$\tau_M = 4NBI_S l\,(\rho_1 + \rho_2)/3$$

(29)

Where $\rho_1$ is the radius of the cone at $h_1$, $\rho_2$ the radius of the cone at $h_2$ and $l$ the length of the side of the cone.

The torque $\tau_z$ is seen to be independent on $\beta$. Changing the skewness of the winding does not influence the motoring torque generated by one conductor. It does, however, change the torque capabilities of the complete unit, since a skewed winding is longer than a straight, occupying a larger volume and decreasing the maximum number or turns in the windings.

The geometrical parameters of an example of an electric machine according to the invention are listed in Table I. The number of turns have been

TABLE I

| GEOMETRICAL PARAMETERS | |
| --- | --- |
| Parameters | |
| $\alpha$ [deg] | 20 |
| $\beta$ [deg] | 20 |
| $h_1$ [mm] | 100 |
| $h_2$ [mm] | 200 |
| N | 300 |
| B [T] | 0.5 |

estimated by assuming an available air gap of 2 cm, a conductor diameter of 2.5 mm and a filling factor of 65%. The weight of the rotor (10-20 kg) is carried by an array of permanent magnets attached on the top of the rotor and the bottom of the roof of the enclosure. The electromagnetic forces generated by the stator unit is used to control and stabilize the levitation.

Using these parameters, the values of force and torque found in table II were calculated. The maximum force that can be

TABLE II

| FORCES AND TORQUES | |
| --- | --- |
| Calculated forces and torques | |
| $F_{Ax}$ [N] | -6.6 $AI_S$ |
| $\tau_M$ [Nm] | 2.3 $I_S$ |
| $\overline{F}_A$ [N] | 10.7 $\Delta I_A$ |
| $\gamma$ [deg] | -15.5 |

obtained in any given direction depends on the maximum current the cables of the winding can withstand, which in turn depends on type of cooling and for how long the current is applied. The 2.5 mm diameter cable wiring used in this example should be able to withstand currents up to 40 A for shorter periods of time, possibly with air cooling.

Running the upper stator unit with a peak current $I_{S1}$ of 40 A, and the lower, $I_{S2}$, at -40 A, would result in an axial force of 264 N, but would result in zero motoring torque and radial stabilizing forces.

Introducing imbalance forces up to 40 A in all phases of both stator units could generate a force in the horizontal direction of up to 1700 N, but zero motoring torque and suspension force in axial direction.

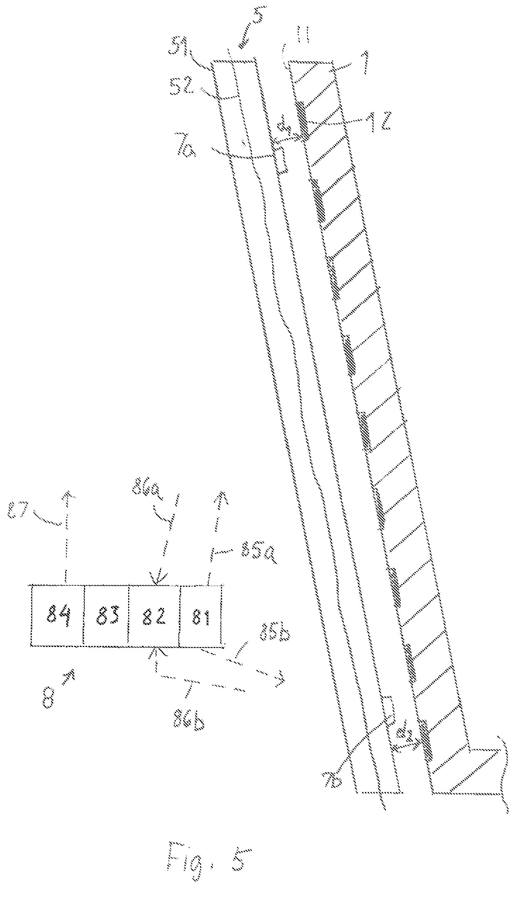

Fig. 5 schematically illustrates a control device for controlling the relative position between the conical elements and the winding arrangements. The figure is a part of fig. 1 showing the inner conical element 1 and its adjacent bearing arrangement 5. The winding arrangement 5 has a sensor 7a, 7b adjacent each end thereof, which sensors 7a, 7b sense the distance d1 and d2 between the conical element 1 and the winding arrangement 5 at the respective end. A control unit 8 emits measuring signals 85a, 85b at a frequency in the kHz range to each of the sensors 7a, 7b. The signals can either be transmitted by a signaling line or wireless and initiate e.g. a laser beam or the like to be sent from the respective sensor towards the conical element 1. Thereby the distance d1 and d2 can be measured by the respective sensor 7a, 7b and the measured values are transmitted through signals 86a, 86b to a receiver 82 of the control unit 8. The measured values are processed in a processing unit 83 arranged to provide an output to a governing unit 84 of the control unit 8. The governing unit 84 sends signal to the winding 51 to affect the current therein in response to the measured distances. By affecting the current in the winding the relative position between the conical element 1 and the winding arrangement can be regulated and corrected.

The sensors 7a, 7b may alternatively be attached to the conical element in stead of on the winding arrangement. In that case only wireless transmission can be applied. The processing unit 83 may be arranged to compute also the time derivate of the distances d1 and d2.

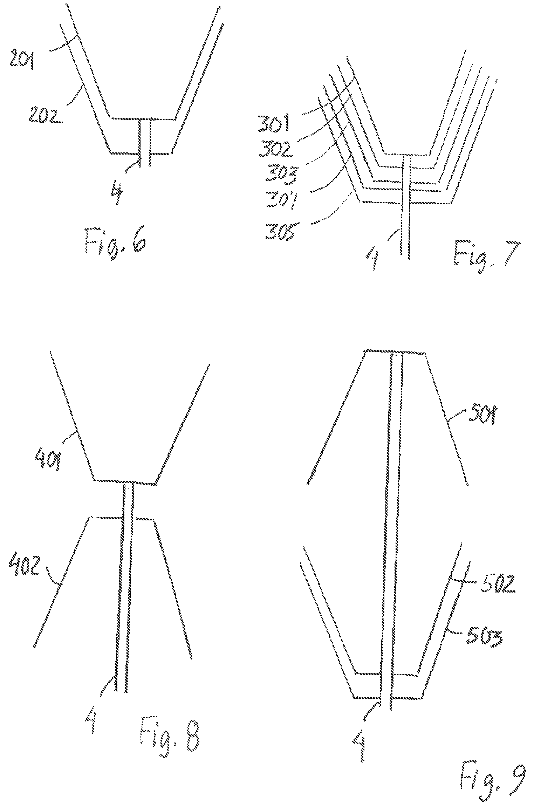

The configuration of the conical elements can be made in various ways as schematically illustrated in figures 6 - 9, showing only the conical elements of each example. In fig. 6 there are only two conical elements 201, 202 connected to a common shaft 4, and in fig. 7 the number of conical elements 301, 302, 303, 304, 305 is five. Fig.8 illustrates an example in which the conical elements 401, 402 are not located inside each other, but have their respective small ends facing towards each other and connected by the shaft 4. In fig. 9 the device consists of three conical elements 501, 502, 503. In this case the two conical elements 501, 502 have their respective large ends facing each other. A third conical element 503 is coaxially located on the outside of one of these.

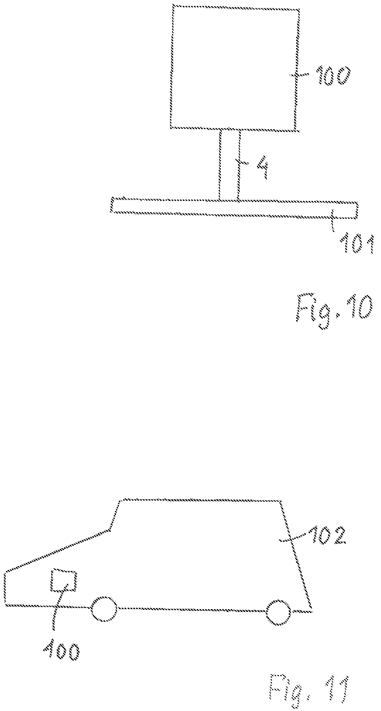

Fig. 10 illustrates an electrical machine 100 with a magnetic bearing according to the invention and is by the shaft 4 joining the conical elements (not shown) connected to a flywheel 101. The machine 100 is arranged to operate alternating as a motor or a generator for charging the flywheel 101 with kinetic energy and be driven by its kinetic energy, respectively.

Fig. 11 illustrates a vehicle 102 provided with an electric machine 100 according to the invention and including a flywheel. The machine is arranged for providing driving energy to the vehicle. It is understood the vehicle 102 includes the necessary additional equipment for that such as an electric accumulator, transmission etc. Advantageously the machine is arranged to operate at two different voltage levels in order to obtain either quick or slow charging or discharging. Such a system is described in detail in EP 1 565337.

**Claims**

1. A conical magnetic bearing for contact-free journaling a rotating body, which bearing includes a rotary component and a stationary component, the rotary component including at least two conical elements (1, 2, 3) mechanically connected to each other in a fixed relationship, each of said elements (1, 2, 3) having at least one conical surface (11, 21 a, 21 b, 31) defining a respective axis (O-O) of the element (1, 2, 3), the axes (O-O) of the elements (1, 2, 3) being aligned with each other, at least one of said elements (1, 2, 3) being provided with magnets (12, 22a, 22b, 32) at its conical surface (11, 21 a, 21 b, 31), the stationary component including a conical winding arrangement (5, 6) adjacent each of said magnet-provided conical surfaces (11, 21 a, 21 b, 31), each said winding arrangement (5, 6) including at least two electric windings (52, 62) of different phases, **characterized in that** the electric winding arrangement (5, 6) is arranged in an air gap between two adjacent conical elements and is attached to a respective non-ferrous stationary support structure (51, 61) arranged to provide fixation of the respective winding arrangement (5, 6) in a defined position, whereby each winding arrangement (5, 6) consists of a plurality of conductors (52, 62) extending in a conical plane, each conductor (52, 62) extending at an angle ($\beta$) in relation to a projection of the cone axis on the conical plane, which angle ($\beta$) is in the range of 1 ° to 89° at least during the major extension of the conductor (52, 62), and **in that** said angle ($\beta$) of a first (5) of said winding arrangements is in the opposite direction to said angle ($\beta$) of a second of said winding arrangements.

2. The conical magnetic bearing according to claim 1, **characterized in that** said angle ($\beta$) is continuously changing along the extension of each conductor (52, 62).

3. The conical magnetic bearing according to claim 1 or 2, **characterized in that** the winding (52, 62) of each phase (A, B, C) includes two sub-windings (A1, A2, B1, B2, C1, C2).

4. The conical magnetic bearing according to any of claims 1-3, **characterized in that** the support structure (51, 61) is non-metallic, preferably an epoxy or a ceramic.

5. The conical magnet bearing according to any of claims 1-4, **characterized in that** the winding arrangement 5, 6) is embedded in the support structure (51, 61).

6. The conical magnetic bearing according to any of claims 1-5, **characterized in that** the number of said conical surfaces (11, 21 a, 21 b, 31 a, 31 b) of the rotating component is in the range of two to four.

7. The conical magnetic bearing according to any of claims 1-6, **characterized in that** the conical elements have the same cone angle ($\alpha$) and the cone angle ($\alpha$) is in the range of 10° to 40°, preferably within the range of 17° to 23°.

8. The conical magnet bearing according to any of claims 1-7, **characterized in that** the bearing includes sensing means (7a, 7b) sensing the distance (d1, d2) between at least one of said conical surfaces (11) and the adjacent winding arrangement (5), and further includes control means (8) affecting the current in the windings of at least one of said winding arrangements (5, 6), which control means (8) operates in response to the sensing means (7a, 7b).

9. The conical magnet bearing according to claim 8, **characterized in that** the sensing means (7a, 7b) includes at least two sensors (7a, 7b) located at different axial positions of the conical magnetic bearing, preferably adjacent each end of one (11) of the conical surfaces.

10. The conical magnetic bearing according to claim 8 or 9, **characterized in that** the sensing means (7a, 7b) operates intermittently at a frequency in the range of 1 kHz to 100 kHz, preferably in the range of 10 kHz to 30 kHz.

11. A rotary electric machine with a rotor and a stator, **characterized in that** the machine is provided with a conical magnetic bearing according to any of claims 1-10 and **in that** said rotary component constitutes the rotor of the machine and said stationary component constitutes the stator of the machine.

12. The rotary electric machine according to claim 11, **characterized in that** the machine is arranged to operate alternating as a motor and a generator.

13. The rotary electric machine according to claim 11 or 12, **characterized in that** each winding arrangement is divided into two separate winding sets, one winding set for high voltage and the other winding set for low voltage.

14. The rotary electric machine according to any of claims 11-13, **characterized in that** the machine (100) includes a flywheel (101) connected to the rotor.

15. A vehicle or a craft, **characterized in that** the vehicle (102) or the craft, respectively includes a rotary electric machine (100) according to any of claims 11 - 14.

**Patentansprüche**

1. Konisches Magnetlager zur kontaktfreien Lagerung eines Drehkörpers, wobei das Lager eine Drehkomponente und eine stationäre Komponente enthält, wobei die Drehkomponente mindestens zwei konische Elemente (1, 2, 3), die mechanisch miteinander in einer festen Beziehung verbunden sind, enthält, wobei jedes der Elemente (1, 2, 3) mindestens eine konische Oberfläche (11, 21a, 21b, 31), die eine jeweilige Achse (0-0) des Elements (1, 2, 3) definiert, aufweist, wobei die Achsen (0-0) der Elemente (1, 2, 3) aufeinander ausgerichtet sind, wobei mindestens eines der Elemente (1, 2, 3) an seiner konischen Oberfläche (11, 21a, 21b, 31) mit Magneten (12, 22a, 22b, 32) versehen ist, wobei die stationäre Komponente eine konische Wicklungsanordnung (5, 6) enthält, die benachbart zu jeder der mit einem Magneten versehenen Oberflächen (11, 21a, 21b, 31) ist, wobei jede Wicklungsanordnung (5, 6) mindestens zwei elektrische Wicklungen (52, 62) von unterschiedlichen Phasen enthält, **dadurch gekennzeichnet, dass** die elektrische Wicklungsanordnung (5, 6) in einem Luftspalt zwischen zwei benachbarten konischen Elementen angeordnet ist und an einer jeweiligen eisenfreien stationären Trägerstruktur (51, 61), die angeordnet ist, um eine Befestigung der jeweiligen Wicklungsanordnung (5, 6) in einer definierten Position bereitzustellen, befestigt ist, wobei jede Wicklungsanordnung (5, 6) aus mehreren Leitern (52, 62) besteht, die sich in einer konischen Ebene erstrecken, wobei sich jeder Leiter (52, 62) unter einem Winkel (β) in Bezug auf eine Projektion der Konusachse auf die konische Ebene erstreckt, wobei der Winkel (β) mindestens während der größeren Ausdehnung des Leiters (52, 62) in dem Bereich von 1° bis 89° liegt, und dass der Winkel (β) einer ersten (5) von den Wicklungsanordnungen in der gegenüberliegenden Richtung des Winkels (β) einer zweiten von den Wicklungsanordnungen liegt.

2. Konisches Magnetlager nach Anspruch 1, **dadurch gekennzeichnet, dass** sich der Winkel (β) kontinuierlich entlang der Ausdehnung jedes Leiters (52, 62) verändert.

3. Konisches Magnetlager nach Anspruch 1 oder 2, **dadurch gekennzeichnet, dass** die Wicklung (52, 62) jeder Phase (A, B, C) zwei Unterwicklungen (A1, A2, B1, B2, C1, C2) enthält.

4. Konisches Magnetlager nach einem der Ansprüche 1 bis 3, **dadurch gekennzeichnet, dass** die Trägerstruktur (51, 61) nicht-metallisch ist, vorzugsweise ein Epoxidharz oder eine Keramik.

5. Konisches Magnetlager nach einem der Ansprüche 1 bis 4, **dadurch gekennzeichnet, dass** die Wicklungsanordnung (5, 6) in die Trägerstruktur (51, 61) eingebettet ist.

6. Konisches Magnetlager nach einem der Ansprüche 1 bis 5, **dadurch gekennzeichnet, dass** die Anzahl der konischen Oberflächen (11, 21a, 21b, 31a, 31b) der Drehkomponente in dem Bereich von zwei bis vier liegt.

7. Konisches Magnetlager nach einem der Ansprüche 1 bis 6, **dadurch gekennzeichnet, dass** die konischen Elemente denselben Konuswinkel (α) aufweisen und dass der Konuswinkel (α) in dem Bereich von 10° bis 40°, vorzugsweise innerhalb des Bereichs von 17° bis 23° liegt.

8. Konisches Magnetlager nach einem der Ansprüche 1 bis 7, **dadurch gekennzeichnet, dass** das Lager Sensormittel (7a, 7b) enthält, die den Abstand (d1, d2) zwischen mindestens einer der konischen Oberflächen (11) und der benachbarten Wicklungsanordnung (5) sensorisch erfassen, und ferner Steuermittel (8) enthält, die den Strom in den Wicklungen mindestens einer der Wicklungsanordnungen (5, 6) beeinflussen, wobei die Steuermittel (8) als Reaktion auf die Sensormittel (7a, 7b) arbeiten.

9. Konisches Magnetlager nach Anspruch 8, **dadurch gekennzeichnet, dass** die Sensormittel (7a, 7b) mindestens zwei Sensoren (7a, 7b) enthalten, die an unterschiedlichen axialen Positionen des konischen Magnetlagers angeordnet sind, vorzugsweise benachbart zu jedem Ende einer (11) der konischen Oberflächen.

10. Konisches Magnetlager nach Anspruch 8 oder 9, **dadurch gekennzeichnet, dass** die Sensormittel (7a, 7b) intermittierend mit einer Frequenz in dem Bereich von 1 kHz bis 100 kHz, vorzugsweise in dem Bereich von 10 kHz bis 30 kHz arbeiten.

11. Elektrische Drehmaschine mit einem Rotor und einem Stator, **dadurch gekennzeichnet, dass** die Maschine mit einem konischen Magnetlager nach einem der Ansprüche 1 bis 10 versehen ist und dass die Drehkomponente den Rotor der Maschine bildet und die stationäre Komponente den Stator der Maschine bildet.

12. Elektrische Drehmaschine nach Anspruch 11, **dadurch gekennzeichnet, dass** die Maschine angeordnet ist, um abwechselnd als ein Motor und als ein Generator zu arbeiten.

13. Elektrische Drehmaschine nach Anspruch 11 oder 12, **dadurch gekennzeichnet, dass** jede Wicklungsanordnung in zwei getrennte Wicklungssätze unterteilt ist, einen Wicklungssatz für Hochspannung und den anderen Wicklungssatz für Niederspannung.

14. Elektrische Drehmaschine nach einem der Ansprüche 11 bis 13, **dadurch gekennzeichnet, dass** die Maschine (100) ein Schwungrad (101) enthält, das mit dem Rotor verbunden ist.

15. Kraftfahrzeug oder ein Fahrzeug, **dadurch gekennzeichnet, dass** das Kraftfahrzeug (102) bzw. das Fahrzeug eine elektrische Drehmaschine (100) nach einem der Ansprüche 11 bis 14 enthält.

**Revendications**

1. Palier magnétique conique destiné à guider en rotation sans contact un corps tournant, ledit palier comprenant un composant rotatif et un composant fixe, le composant rotatif comprenant au moins deux éléments coniques (1, 2, 3) reliés mécaniquement l'un à l'autre dans une relation fixée, chacun desdits éléments (1, 2, 3) présentant au moins une surface conique (11, 21a, 21b, 31) définissant un axe respectif (0-0) de l'élément (1, 2, 3), les axes (0-0) des éléments (1, 2, 3) étant alignés entre eux, au moins un desdits éléments (1, 2, 3) étant muni d'aimants (12, 22a, 22b, 32) à sa surface conique (11, 21a, 21b, 31), le composant fixe comprenant un agencement conique (5, 6) d'enroulements au voisinage de chacune desdites surfaces coniques (11, 21a, 21b, 31) munies d'aimants, chacun desdits agencement (5, 6) d'enroulements comprenant au moins deux enroulements électriques (52, 62) de phases différentes, **caractérisé en ce que** l'agencement (5, 6) d'enroulements électriques est disposé dans un entrefer entre deux éléments coniques adjacents et est fixé à une structure porteuse fixe (51, 61) non ferreuse respective disposée de façon à assurer la fixation de l'agencement (5, 6) respectif d'enroulements dans une position définie, chaque agencement (5, 6) d'enroulements étant constitué d'un pluralité de conducteurs (52, 62) s'étendant dans un plan conique, chaque conducteur (52, 62) s'étendant suivant un angle ($\beta$) par rapport à une projection de l'axe du cône sur le plan conique, ledit angle ($\beta$) se situant dans un intervalle de 1° à 89° sur au moins la plus grande étendue du conducteur (52, 62), et **en ce que** ledit angle ($\beta$) d'un premier (5) desdits agencements d'enroulements est de sens opposé audit angle ($\beta$) d'un deuxième desdits agencements d'enroulements.

2. Palier magnétique conique selon la revendication 1, **caractérisé en ce que** ledit angle ($\beta$) varie de façon continue le long de l'étendue de chaque conducteur (52, 62).

3. Palier magnétique conique selon la revendication 1 ou 2, **caractérisé en ce que** l'enroulement (52, 62) de chaque phase (A, B, C) comprend deux sous-enroulements (A1, A2, B1, B2, C1, C2).

4. Palier magnétique conique selon l'une quelconque des revendications 1 à 3, **caractérisé en ce que** la structure porteuse (51, 61) est non métallique, de préférence un époxy ou une céramique.

5. Palier magnétique conique selon l'une quelconque des revendications 1 à 4, **caractérisé en ce que** l'agencement (5, 6) d'enroulements est encastré dans la structure porteuse (51, 61).

6. Palier magnétique conique selon l'une quelconque des revendications 1 à 5, **caractérisé en ce que** le nombre desdites surfaces coniques (11, 21a, 21b, 31a, 31b) du composant tournant se situe dans un intervalle de deux à quatre.

7. Palier magnétique conique selon l'une quelconque des revendications 1 à 6, **caractérisé en ce que** les éléments coniques présentent le même angle ($\alpha$) de cône et **en ce que** l'angle ($\alpha$) de cône se situe dans un intervalle de 10° à 40°, de préférence à l'intérieur d'un intervalle de 17° à 23°.

8. Palier magnétique conique selon l'une quelconque des revendications 1 à 7, **caractérisé en ce que** le palier comprend un moyen (7a, 7b) de détection détectant la distance (d1, d2) entre au moins une desdites surfaces coniques (11) et l'agencement (5) d'enroulements adjacent, et comprend en outre un moyen (8) de régulation affectant le courant dans les enroulements d'au moins un desdits agencements (5, 6) d'enroulements, ledit moyen (8) de régulation fonctionnant en réaction au moyen (7a, 7b) de détection.

9. Palier magnétique conique selon la revendication 8, **caractérisé en ce que** le moyen (7a, 7b) de détection comprend au moins deux capteurs (7a, 7b) situés à des positions axiales différentes du palier magnétique conique, de préférence au voisinage de chaque extrémité de l'une (11) des surfaces coniques.

10. Palier magnétique conique selon la revendication 8 ou 9, **caractérisé en ce que** le moyen (7a, 7b) de détection fonctionne par intermittence à une fréquence comprise dans un intervalle de 1 kHz à 100 kHz, de préférence dans un intervalle de 10 kHz à 30 kHz.

11. Machine électrique tournante dotée d'un rotor et d'un stator, **caractérisée en ce que** la machine est munie d'un palier magnétique conique selon l'une quelconque des revendications 1 à 10 et **en ce que** ledit composant rotatif constitue le rotor de la machine et ledit composant fixe constitue le stator de la machine.

12. Machine électrique tournante selon la revendication 11, **caractérisée en ce que** la machine est disposée pour fonctionner alternativement en tant que moteur et en tant que générateur.

13. Machine électrique tournante selon la revendication 11 ou 12, **caractérisée en ce que** chaque agencement d'enroulements est divisé en deux ensembles d'enroulements distincts, un ensemble d'enroulements étant destiné à la haute tension et l'autre ensemble d'enroulements destiné à la basse tension.

14. Machine électrique tournante selon l'une quelconque des revendications 11 à 13, **caractérisée en ce que** la machine (100) comprend un volant (101) d'inertie relié au rotor.

15. Véhicule ou engin **caractérisé en ce que** le véhicule (102) ou l'engin, respectivement, comprend une machine électrique tournante (100) selon l'une quelconque des revendications 11 à 14.

Fig.1

Fig. 2

Fig. 3

Fig. 4

Fig. 5

Fig. 6

Fig. 7

Fig. 8

Fig. 9

Fig. 10

Fig. 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7667418 B
- US 2006238053 A
- EP 1565337 A
- EP 1885047 A

**Non-patent literature cited in the description**

- **A. CHIBA et al.** *Newnes,* 2005
- **MIN KANG et al.** Electrical Machines and Systems. *ICEMS 2008. International conference 2008,* 2008, 990-994
- **MIN KANG et al.** Electrical Machines and Systems. *ICEMS 2008. International Conference 2008,* 2008, 1148-1152
- **J SANTIAGO et al.** Electrical Machines. *International Conference 2008,* 2008, 1-5